Europäisches Patentamt

European Patent Office

Office européen des brevets

(19)

(11) Numéro de publication : **0 146 417**
**B1**

(12) **FASCICULE DE BREVET EUROPÉEN**

(45) Date de publication du fascicule du brevet :
**23.12.87**

(51) Int. Cl.⁴ : **B 23 B 47/28**

(21) Numéro de dépôt : **84401909.1**

(22) Date de dépôt : **25.09.84**

(54) **Dispositif pour la détermination des trous de perçage de panneaux de bois.**

(30) Priorité : **20.12.83 FR 8320408**

(43) Date de publication de la demande :
**26.06.85 Bulletin 85/26**

(45) Mention de la délivrance du brevet :
**23.12.87 Bulletin 87/52**

(84) Etats contractants désignés :
**AT BE CH DE GB IT LI NL SE**

(56) Documents cités :
**DE-A- 2 750 869**
**DE-A- 3 020 970**
**GB-A- 2 071 537**

(73) Titulaire : **LA FRANCAISE METALLURGIE**
**15, place de la Nation**
**F-75011 Paris (FR)**

(72) Inventeur : **Fallon, Régis**
**40, Rue Charles Ollier**
**F-94170 Le Perreux Sur Marne (FR)**

(74) Mandataire : **Ramey, Daniel et al**
**Cabinet NETTER 40, rue Vignon**
**F-75009 Paris (FR)**

Jouve, 18, rue St-Denis, 75001 Paris, France

## Description

L'invention concerne un dispositif pour la détermination des trous de perçage de panneaux, en particulier de panneaux de bois, en vue de leur assemblage perpendiculairement l'un à l'autre, en L ou en T, au moyen de tourillons ou de chevilles logés dans ces trous.

Lorsque l'on veut ainsi assembler deux panneaux perpendiculairement l'un à l'autre, par exemple en L, il est nécessaire de percer des trous dans le chant d'un des panneaux, de percer des trous dans une grande face de l'autre panneau, d'enfoncer les chevilles sur la moitié de leur longueur dans les trous formés dans l'un des panneaux, d'amener l'autre panneau perpendiculairement au premier, en alignant les trous formés dans cet autre panneau avec les chevilles déjà montées dans le premier panneau, et de faire pénétrer la moitié libre des chevilles dans les trous formés dans cet autre panneau. Pour que les panneaux puissent être assemblés et que le chant d'un panneau soit exactement dans le prolongement d'une grande face de l'autre panneau, il faut que les différents trous de deux panneaux se correspondent exactement et soient formés à une distance déterminée du bord de chaque panneau, toute erreur dans la prise des mesures et le marquage des axes des trous à percer sur les panneaux se traduisant par l'impossibilité de l'assemblage des panneaux.

L'invention a pour objet un dispositif permettant la détermination des trous de perçage dans les différents panneaux et le perçage de ces trous, sans risque d'erreur et sans qu'il soit nécessaire de prendre des mesures et de marquer au préalable les axes des trous à percer sur les panneaux.

On connaît par DE-A-2 750 869 ou par DE-A-3 020 970 un dispositif pour la détermination des trous de perçage de panneaux, en particulier de panneaux de bois, en vue de leur assemblage perpendiculairement l'un à l'autre au moyen de chevilles logées dans ces trous, comprenant un support à deux branches perpendiculaires et deux éléments munis de canons de perçage montés coulissants chacun par rapport à une branche du support.

Le dispositif selon l'invention est caractérisé en ce que le support est un boîtier et lesdits éléments des plaques coulissant dans les branches du boîtier, et que le dispositif comprend des moyens pour déplacer les deux plaques en synchronisme l'une avec l'autre, en fonction de l'épaisseur des panneaux.

Les deux plaques munies de canons de perçage peuvent être réglées en position, au moyen d'une commande unique, en fonction de l'épaisseur des panneaux. Lorsque ce réglage est effectué, on place le dispositif en équerre sur les chants des deux panneaux superposés, à l'endroit où l'on veut placer la première cheville, on perce les trous dans les panneaux en introduisant le foret d'une perceuse dans le canon de perçage choisi d'une plaque, puis de l'autre, on déplace le dispositif jusqu'à l'emplacement choisi de la cheville suivante, et on recommence les opérations précitées.

La seule opération qui est nécessaire avant le perçage des trous est donc le réglage du dispositif en fonction de l'épaisseur des panneaux, ce qui peut se faire à vue sans qu'il soit nécessaire de prendre des mesures.

On assure ainsi un assemblage parfait des deux panneaux, sans risque d'erreur.

Selon une autre caractéristique préférée de l'invention, les moyens permettant de déplacer les deux plaques en synchronisme comprennent un arbre à cames logé dans le boîtier à la jonction des deux branches de ce boîtier, et des moyens de rappel appliquant élastiquement les plaques sur les cames.

Les cames peuvent être à profil évolutif continu, pour permettre un réglage continu du dispositif en fonction de l'épaisseur des panneaux, ou bien peuvent avoir un profil en gradins, et permettre alors une adaptation du dispositif à des épaisseurs prédéterminées de panneaux.

Selon une autre caractéristique préférée de l'invention, une des branches du boîtier comprend, à son extrémité libre, des rainures associées chacune à un canon de perçage de la plaque correspondante et ayant chacune une largeur interne égale au diamètre du canon de perçage correspondant. La face externe de cette branche du boîtier peut comprendre des repères qui sont alignés deux à deux, perpendiculairement à la direction de déplacement de la plaque correspondante, sur l'axe d'un canon de perçage quand la plaque est dans une position prédéterminée, par exemple en fin de course.

Le dispositif peut alors être utilisé pour l'assemblage de deux panneaux en T, c'est-à-dire perpendiculairement l'un à l'autre et sans que le chant d'un des panneaux soit dans le prolongement d'une face de l'autre panneau.

Dans la description qui suit, faite à titre d'exemple, on se réfère aux dessins annexés, dans lesquels :

la figure 1 est une vue schématique en perspective d'un dispositif selon une réalisation de l'invention ;

les figures 2, 3 et 4 sont respectivement des vues de face, de gauche et de dessus du dispositif ;

la figure 5 est une vue en coupe selon la ligne V-V de la figure 7, représentant le dispositif dont le capot a été retiré ;

la figure 6 est une vue de gauche de ce dispositif, le capot étant retiré ;

la figure 7 est une vue de dessus du même dispositif ;

la figure 8 est une vue de bout d'une variante de réalisation de l'arbre à cames ;

les figures 9 et 10 représentent schématiquement l'utilisation du dispositif pour l'assemblage de deux panneaux en L ;

les figures 11 à 13 illustrent schématiquement l'utilisation de ce dispositif pour l'assemblage de deux panneaux en T.

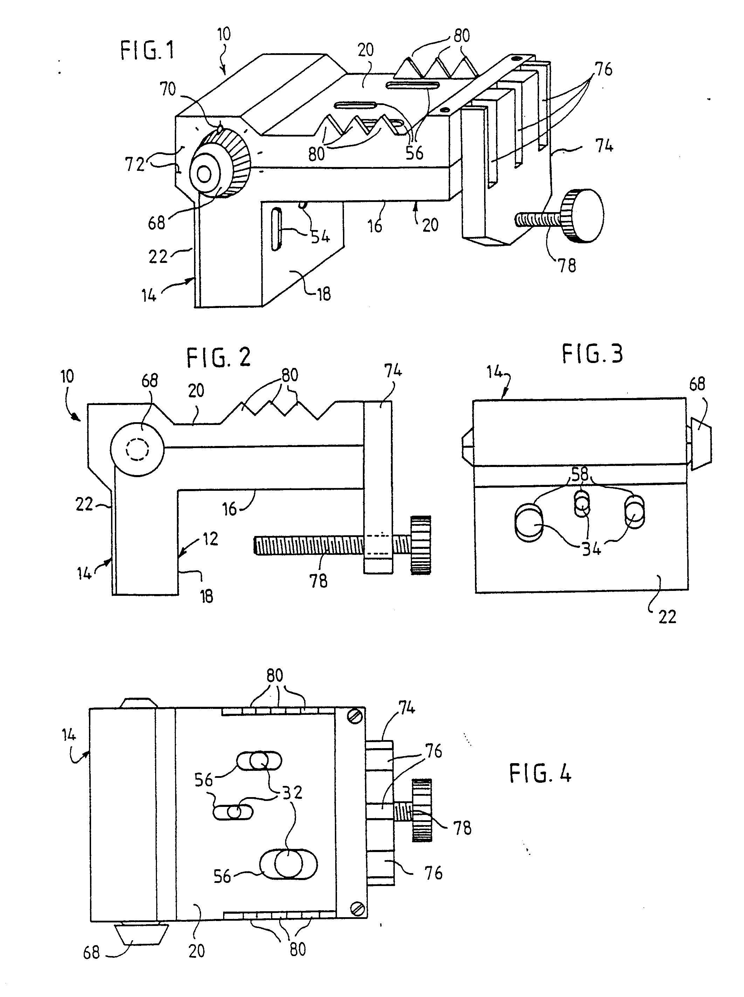

On se réfère d'abord aux figures 1 à 7 illustrant la structure du dispositif.

Ce dispositif comprend un boîtier 10, par exemple métallique, à deux branches perpendiculaires ou en équerre, qui est formé d'un demi-boîtier inférieur 12 en forme de L et d'un demi-boîtier supérieur 14, ou capot, également en forme de L, assemblés l'un à l'autre par des vis.

Le demi-boîtier inférieur 12 comprend une première branche 16, que l'on appellera branche horizontale dans ce qui suit, et une seconde branche 18, perpendiculaire à la première et que l'on appellera branche verticale dans ce qui suit. De même, le capot 14 comprend une première branche horizontale 20 et une seconde branche verticale 22.

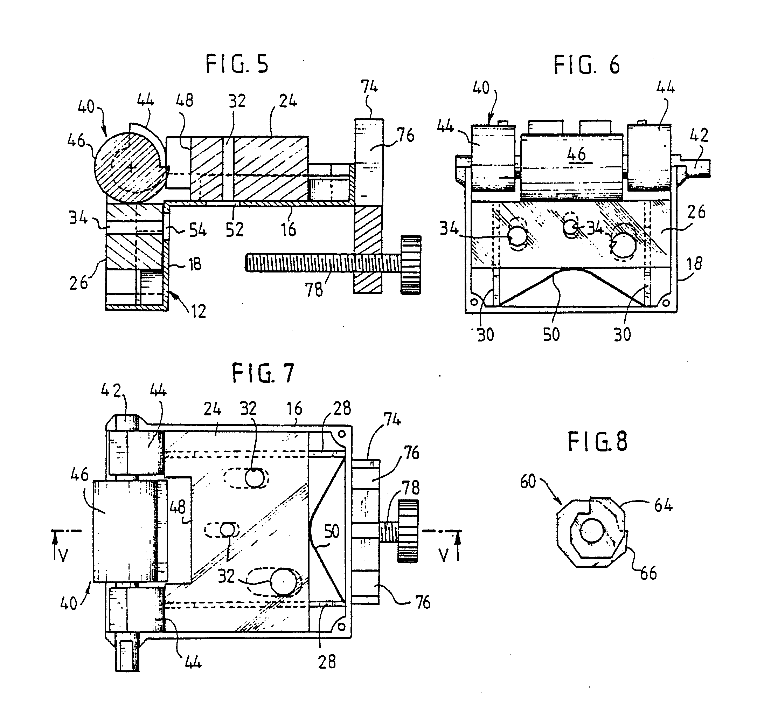

Deux plaques 24, 26 (figures 5 à 7) sont montées coulissantes dans les deux branches du boîtier 10. Pour cela, la face interne des branches 16 et 18 du demi-boîtier inférieur 12 comprend des nervures minces en saillie 28 et 30 respectivement, qui sont reçues dans des rainures correspondantes des plaques 24 et 26 respectivement, pour le guidage de celles-ci en translation.

Chaque plaque 24, 26 est munie de canons de perçage 32, 34 respectivement, chaque plaque comprenant par exemple trois canons de perçage de diamètres différents correspondant aux diamètres standards des chevilles utilisées pour l'assemblage des panneaux, ces diamètres étant de 6, 8 et 10 mm respectivement selon les normes européennes, et de 1/2, 1/4, 3/8 ou 5/16 de pouce selon les normes anglaises et américaines.

Les axes des canons de perçage 32 et 34 prévus dans les plaques 24 et 26 sont contenus deux à deux dans des plans parallèles, perpendiculaires aux deux branches du boîtier, c'est-à-dire parallèles au plan de coupe V-V sur la figure 7, ce plan pouvant également être défini comme déterminé par les directions de déplacement des plaques 24 et 26.

Ainsi, les axes de deux canons de perçage 32 et 34 de même diamètre prévus dans les deux plaques 24 et 26 sont perpendiculaires l'un à l'autre dans un même plan défini par les directions de déplacement des deux plaques 24 et 26.

Les plaques 24 et 26 sont déplaçables en translation, perpendiculairement l'une à l'autre, dans les deux branches du boîtier 10, au moyen d'un arbre à cames 40 logé dans le boîtier 10 à la jonction des deux branches.

Cet arbre à cames 40 comprend un arbre 42 guidé en rotation à ses extrémités dans des demi-paliers formés respectivement par le demi-boîtier inférieur 12 et le capot 14, et des cames montées fixement sur l'arbre 42, comprenant deux cames d'extrémité 44 coopérant avec la plaque 24, et une came centrale 46 coopérant avec l'autre plaque 26 et prévue en regard d'un décrochement 48 de l'extrémité correspondante de la première plaque 24. Chaque plaque 24, 26 est poussée élastiquement en appui sur les cames 44, 46 correspondantes par un moyen approprié, par exemple un ressort à lame 50 disposé entre les extrémités, opposées à l'arbre à cames 40, des plaques et des deux branches du demi-boîtier inférieur 12.

Des fentes ou lumières allongées 52 et 54 sont formées dans les grandes faces des branches 16 et 18 du demi-boîtier inférieur 12, en regard des canons de perçage 32 et 34 respectivement, et sont orientées parallèlement à la direction de déplacement des plaques 24 et 26 respectivement, c'est-à-dire perpendiculairement à l'axe de l'arbre à cames 40. De même, des fentes ou lumières allongées 56 et 58 sont formées dans les deux grandes faces des branches 20 et 22 du capot 14, en regard des canons de perçage des deux plaques, en correspondance des fentes ou lumières 52 et 54 du demi-boîtier inférieur 12. Chacune des fentes ou lumières 52, 54, 56, 58 a une longueur au moins égale à la course de la plaque 24, 26 correspondante, et une largeur au moins égale au diamètre du canon de perçage 32 ou 34 correspondant.

On remarquera que la disposition des canons de perçage 32 et 34 dans les plaques 24 et 26 est telle que les canons de perçage de plus petit diamètre sont plus proches de l'axe de l'arbre à cames 40 et que les canons de perçage de plus grand diamètre en sont plus éloignés. On choisira en effet les canons de perçage de plus petit diamètre pour les panneaux de plus faible épaisseur, et les canons de perçage de plus grand diamètre pour les panneaux de plus grande épaisseur.

Les cames 44 de l'arbre à cames 40 sont décalées de 90° par rapport à la came 46 intermédiaire, et les profils des cames sont choisis de telle sorte que le déplacement de la plaque 24 par les cames 44 soit égal à trois fois le déplacement de la plaque 26 par la came 46, pour une rotation déterminée de l'arbre à cames 40.

Dans le cas où les cames 44 et 46 sont à profil évolutif continu, comme représenté dans les figures 5 à 7, on associe à l'arbre à cames 40 un moyen de blocage en position angulaire, par exemple une vis de blocage.

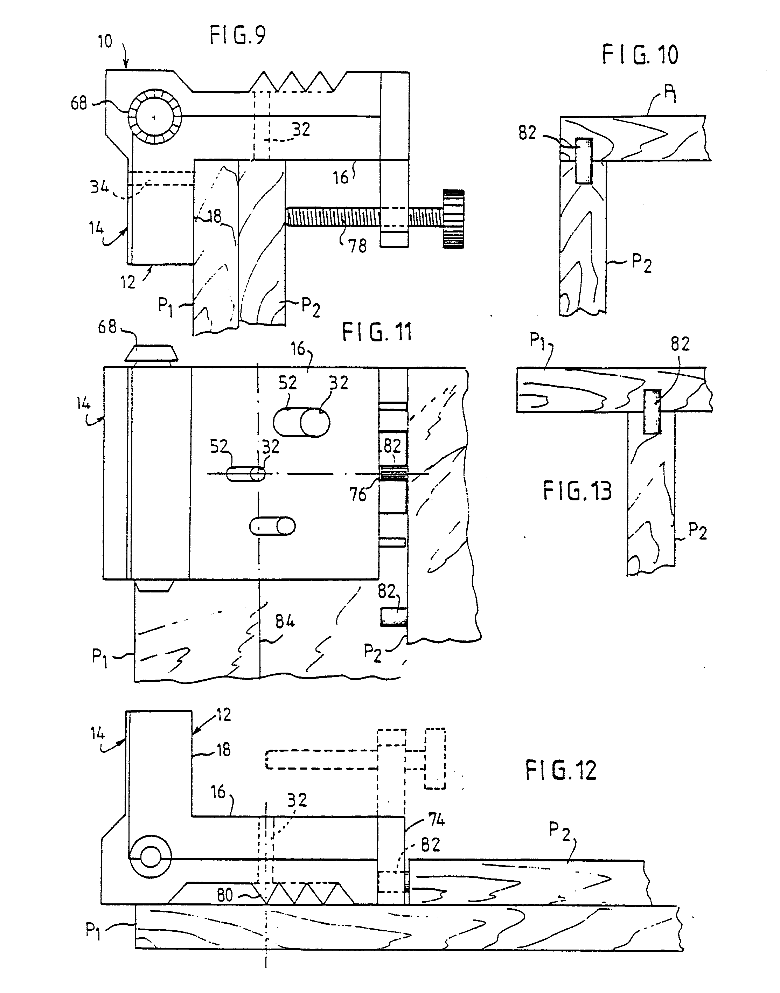

Dans une variante de réalisation représentée en figure 8, les cames 64 et 66 de l'arbre à cames 60, correspondant aux cames 44 et 46 de l'arbre à cames 40, sont à profil en gradins, chaque couple de gradins correspondant à une épaisseur prédéterminée de panneau.

En se reportant à nouveau aux figures 1 à 4, on voit qu'une extrémité de l'arbre à cames 40, extérieure au boîtier 10, est munie d'un bouton 68 d'entraînement en rotation, muni par exemple d'un index 70 déplaçable devant des graduations 72 portées par le boîtier et correspondant à des épaisseurs de panneaux.

L'extrémité libre de la branche horizontale 16 du demi-boîtier inférieur 12 peut être munie d'une pièce 74 déterminant trois rainures verticales 76 qui sont chacune dans le prolongement d'une lumière 52 ou 56 précitée et qui ont la même largeur que le canon de perçage 32 débouchant dans cette lumière. La partie inférieure de la pièce 74 peut également recevoir une tige filetée 78 de longueur déterminée, qui permettra de serrer les panneaux à percer sur la grande face de la branche verticale 18 du demi-boîtier inférieur 12, comme on le verra en référence à la figure 9. De façon classique, l'extrémité extérieure de la tige filetée est munie d'une tête facilitant son vissage et son dévissage.

Sur la grande face de la branche horizontale 20 du capot 14 sont également formées des dents 80 en saillie, dans le prolongement des faces latérales de cette branche horizontale 20, qui s'étendent sensiblement au niveau des extrémités de cette face 20. Ces dents triangulaires 80 sont deux à deux alignées, parallèlement à l'arbre à cames du dispositif, de telle sorte que, quand la plaque 24 est dans une position prédéterminée, par exemple de fin de course, l'axe de chacun des canons de perçage 32 se trouve sur une ligne parallèle à l'axe de l'arbre à cames et joignant deux dents 80 situées d'un côté et de l'autre de la branche horizontale 20. La fonction des dents 80 sera expliquée en référence aux figures 11 à 13.

Pour décrire le fonctionnement et l'utilisation du dispositif selon l'invention, on fera d'abord référence aux figures 9 et 10, concernant l'assemblage en L de deux panneaux P1 et P2 de même épaisseur.

On voit, en figure 10, que, quand les panneaux P1 et P2 sont assemblés en L l'un à l'autre au moyen de chevilles 82, ces chevilles sont logées dans des trous formés dans un chant du panneau P2 et dans une grande face du panneau P1, les axes des trous dans le chant du panneau P2 étant sensiblement à mi-épaisseur du panneau, tandis que les axes des trous dans le panneau P1 doivent être à une distance de l'extrémité du panneau égale à la demi-épaisseur du panneau.

Les panneaux P1 et P2 sont superposés l'un à l'autre comme représenté en figure 9, et le boîtier 10 du dispositif est posé en équerre sur les chants des deux panneaux et est bloqué en position au moyen de la vis 78. En fonction de l'épaisseur des panneaux, on détermine les canons de perçage 32 et 34 correspondants, et au moyen du bouton 68 de l'arbre à cames, on fait tourner cet arbre à cames dans un sens ou dans l'autre pour amener l'axe du canon de perçage 32 choisi sensiblement au milieu du chant du panneau P2. Par construction, le dispositif est tel que la distance entre l'axe du canon de perçage 32 et la branche verticale 18 du demi-boîtier inférieur 12 est égale à l'épaisseur d'un panneau augmentée de la distance entre l'axe du canon de perçage 34 correspondant et la branche horizontale 16 du demi-boîtier inférieur 12.

Une fois que le dispositif est réglé en fonction de l'épaisseur des panneaux, on introduit le foret d'une perceuse ou analogue dans le canon de perçage 32, et on perce le trou à la profondeur voulue dans le chant du panneau P2, puis, de la même façon, on perce le trou à la profondeur voulue dans la grande face du panneau P1.

On déplace ensuite le dispositif sur les chants des deux panneaux, et on recommence ces opérations.

Il suffit alors d'introduire les chevilles 82 dans les trous percés par exemple dans le chant du panneau P2, d'amener les trous percés dans la grande face du panneau P1 en regard des chevilles, et d'appuyer sur l'ensemble pour obtenir l'assemblage représenté en figure 10. Le dispositif selon l'invention garantit que le chant du panneau P1 sera dans l'alignement exact de la grande face extérieure du panneau P2, et que les trous percés dans ces panneaux seront exactement en alignement deux à deux, et cela quelle que soit l'épaisseur des panneaux.

Lorsqu'on désire obtenir un assemblage en T, comme représenté en figure 13, on procède de la façon suivante :

On trace sur la grande face du panneau P1 qui doit être percée la ligne 84 sur laquelle doivent se trouver les axes des trous. On juxtapose ensuite les panneaux P1 et P2 et on fixe le dispositif sur les chants de ces deux panneaux comme représenté en figure 9, pour percer tous les trous voulus dans le chant du panneau P2, sans percer de trous dans la grande face du panneau P1.

On monte ensuite les chevilles 82 dans les trous du panneau P2. On pose ensuite le panneau P1, de telle sorte que sa face qui doit être percée se trouve sur le dessus, on retourne le dispositif à l'envers de telle sorte que sa branche verticale s'étende vers le haut à partir de sa branche horizontale, on le pose sur la face à percer du panneau P1 de telle sorte que les dents 80 correspondant au diamètre choisi de canon de perçage se trouvent sur la ligne 84 des axes des trous à percer dans ce panneau, on pose le panneau P2 sur le panneau P1 de telle sorte que les chevilles 82 montées dans les trous du chant de ce panneau soient orientées vers le dispositif et que les bords latéraux des deux panneaux soient dans le prolongement l'un de l'autre comme représenté en figure 11, on déplace le dispositif sur le panneau P1 le long de la ligne 84 jusqu'à ce que la première cheville 82 du panneau P2 puisse être introduite dans la fente 76 de diamètre correspondant de la pièce 74, position dans laquelle la cheville 82 est alors alignée exactement avec la lumière 52 dans laquelle débouche le canon de perçage 32 choisi. Ensuite, si ce n'est déjà fait, on manœuvre l'arbre à cames au moyen du bouton 68 pour amener le canon de perçage en fin de course, position dans laquelle son axe se trouve exactement sur la ligne joignant les deux dents 80 correspondante. On perce alors un trou à la profondeur voulue dans le panneau P1, au moyen d'un foret de perceuse introduit dans le canon de perçage 32.

On déplace ensuite le dispositif sur le panneau P1 jusqu'à introduire la cheville 82 suivante dans la rainure verticale 76 de diamètre correspondant, et on peut alors percer un nouveau trou dans le panneau P1.

On peut également utiliser le dispositif selon l'invention pour la détermination des trous de perçage dans des panneaux d'épaisseurs différentes, moyennant un réglage supplémentaire du dispositif ou l'utilisation d'une cale compensant la différence d'épaisseur des panneaux.

## Revendications

1. Dispositif pour la détermination des trous de perçage de panneaux, en particulier de panneaux de bois, en vue de leur assemblage perpendiculairement l'un à l'autre au moyen de chevilles logées dans ces trous, comprenant un support (10) à deux branches perpendiculaires et deux éléments (24, 26) munis de canons de perçage (32, 34) montés coulissants chacun par rapport à une branche du support (10), caractérisé en ce que le support (10) est un boîtier et lesdits éléments (24, 26) des plaques coulissant dans les branches du boîtier, et que le dispositif comprend des moyens (40, 50) pour déplacer les deux plaques (24, 26) en synchronisme l'une avec l'autre, en fonction de l'épaisseur des panneaux (P1, P2).

2. Dispositif selon la revendication 1, caractérisé en ce que lesdits moyens comprennent un arbre à cames (40) logé dans le boîtier (10) à la jonction des deux branches de celui-ci, et des moyens de rappel (50) appliquant élastiquement lesdites plaques (24, 26) sur les cames (44, 46).

3. Dispositif selon la revendication 2, caractérisé en ce que les cames (44, 46) sont à profil évolutif continu et permettent un réglage continu du dispositif en fonction de l'épaisseur des panneaux (P1, P2).

4. Dispositif selon la revendication 2, caractérisé en ce que les cames (64, 66) sont à profil en gradins et permettent une adaptation du dispositif à des épaisseurs prédéterminées de panneaux.

5. Dispositif selon l'une des revendications précédentes, caractérisé en ce que les faces internes des deux branches (18, 16) du boîtier (10) forment des faces d'appui, l'une sur une face d'un premier panneau (P1) et l'autre sur les chants juxtaposés de ce premier panneau et d'un second panneau (P2) superposé au premier panneau.

6. Dispositif selon la revendication 5, caractérisé en ce que les moyens (40, 50) de déplacement des deux plaques (24, 26) en synchronisme sont réglés pour que le déplacement d'une (24) des plaques soit égal à trois fois le déplacement de l'autre plaque (26).

7. Dispositif selon l'une des revendications précédentes, caractérisé en ce que chaque plaque coulissante (24, 26) comprend plusieurs canons de perçage (32, 34) de diamètres différents, les axes des deux canons de perçage (32, 34) de même diamètre d'une plaque et de l'autre étant contenus dans un plan déterminé par les directions de déplacement des deux plaques.

8. Dispositif selon l'une des revendications précédentes, caractérisé en ce qu'une branche (16, 20) du boîtier comprend, à son extrémité libre, des rainures (76) associées chacune à un canon de perçage (32) de la plaque (24) correspondante et ayant chacune une largeur interne égale au diamètre interne du canon de perçage (32) associé.

9. Dispositif selon la revendication 8, caractérisé en ce que la partie externe (20) de cette branche du boîtier comprend des repères (80) qui sont alignés deux à deux, perpendiculairement à la direction de déplacement de la plaque (24) correspondante, sur l'axe d'un canon de perçage (32) quand ladite plaque (24) est dans une position prédéterminée, par exemple en fin de course.

10. Dispositif selon l'une des revendications précédentes, caractérisé en ce qu'une branche (16, 20) du boîtier (10) comprend des moyens à vis (78) pour la fixation du dispositif sur deux panneaux (P1, P2) superposés, et pour le serrage de ces panneaux sur l'autre branche (18, 22) du dispositif.

## Claims

1. Device for locating holes drilled in panels, particularly wooden panels, with a view to assembling them perpendicularly relative to one another by means of dowels accommodated in the said holes, comprising a support (10) having two perpendicular branches and two members (24, 26) provided with drill bushes (32, 34) mounted so that each is slidable relative to one branch of the support (10), characterized in that the support (10) is a housing and the said members (24, 26) are plates sliding in the branches of the housing, and in that the device comprises means (40, 50) for moving the two plates (24, 26) in synchronism one with the other, as a function of the thickness of the panels (P1, P2).

2. Device according to claim 1, characterized in that the said means comprise a cam shaft (40) accommodated in the housing (10) at the junction of the two branches of the latter, and restoring means (50) pressing the said plates (24, 26) elastically on the cams (44, 46).

3. Device according to claim 2, characterized in that the cams (44, 46) have a continuous development profile and permit continuous adjustment of the device as a function of the thickness of the panels (P1, P2).

4. Device according to claim 2, characterized in that the cams (64, 66) have a stepped profile and permit the device to be adjusted to predetermined panel thicknesses.

5. Device according to one of the preceding claims, characterised in that the internal surfaces of the two branches (18, 16) of the housing (10) form bearing surfaces, one on one surface of the first panel (P1) and the other on the juxtaposed narrow edges of this first panel and of the second panel (P2) placed on top of the first panel.

6. Device according to claim 5, characterized in that the means (40, 50) for displacing the two plates (24, 26) in synchronism are adjusted so that the displacement of one (24) of the plates should be equal to three times the displacement of the other plate (26).

7. Device according to one of the preceding claims, characterized in that each sliding plate (24, 26) comprises a plurality of drill bushes (32, 34) of different diameters, the axes of the two drill bushes (32, 34) of the same diameter of the two plates being contained within a plane determined by the directions of displacement of the two plates.

8. Device according to one of the preceding claims, characterized in that one branch (16, 20) of the housing comprises, at its free end, grooves (76) each associated with one drill bush (32) of the corresponding plate (24) and each having an internal width equal to the internal diameter of the associated drill bush (32).

9. Device according to claim 8, characterized in that the outer part (20) of this branch of the housing comprises reference marks (80) which are aligned in pairs, perpendicularly to the direction of displacement of the corresponding plate (24), on the axis of a drill bush (32) when the said plate (24) is in a predetermined position, for example at the end of its travel.

10. Device according to one of the preceding claims, characterized in that one branch (16, 20) of the housing (10) comprises screw means (78) for fixing the device on two superposed panels (P1, P2), and for gripping these panels on the other branch (18, 22) of the device.

**Patentansprüche**

1. Vorrichtung zum Festlegen von Bohrlöchern in Platten, insbesondere Holzplatten, um sie mittels in diese Löcher eingesetzter Dübel aufeinander senkrecht zu verbinden, bestehend eus einem Träger (10) mit zwei zueinander senkrecht liegenden Armen und zwei mit Bohrbüchsen (32, 34) ausgestatteten Elementen (24, 26) von denen jedes gegenüber einem Arm des Trägers (10) gleitend angebracht ist, dadurch gekennzeichnet, daß der Träger (10) ein Gehäuse ist, und die genannten Elemente (24, 26) Scheiben sind die in den Armen des Gehäuses gleiten und daß die Vorrichtung Mittel (40, 50) zur gleichzeitigen Verstellung der beiden Scheiben (24, 26) synchron zueinader in Abhängigkeit von der Dicke der Platten (P1, P2) besitzt.

2. Vorrichtung nach Anspruch 1, dadurch gekennzeichnet, daß die genannten Mittel eine Nockenwelle (40), welche im Gehäuse (10) an der Verbindung der beiden Arme derselben angeordnet ist, und Rückstellmittel (50), welche die genannten Scheiben (24, 26) an den Nocken (44, 46) federnd andrücken, aufweisen.

3. Vorrichtung nach Anspruch 2, dadurch gekennzeichnet, daß die Nocken (44, 46) ein sich kontinuierlich vergrößerndes Profil aufweisen, und eine stufenlose Steuerung der Vorrichtung in Abhängigkeit von der Dicke der Platten (P1, P2) ermöglichen.

4. Vorrichtung nach Anspruch 2, dadurch gekennzeichnet, daß die Nocken ein Stufenprofil aufweisen, und eine Anpassung der Vorrichtung an vorher festgelegte Dicken der Platten ermöglichen.

5. Vorrichtung nach einem der vorangehenden Ansprüche, dadurch gekennzeichnet, daß die inneren Flächen der beiden Arme (18, 16) des Gehäuses (10) Anschlagflächen bilden, eine über einer Oberfläche einer ersten Platte (P1) und die andere über den nebeneinanderliegenden Kanten dieser ersten Platte und einer zweiten Platte (P2), die über der ersten Platte gelegen ist.

6. Vorrichtung nach Anspruch 5, dadurch gekennzeichnet, daß die Mittel (40, 50) zur gleichzeitigen Verstellung der beiden Scheiben (24, 26) so gesteuert sind, daß die Verstellung der einen (24) der Scheiben gleich ist der dreifachen Verstellung der anderen Scheibe (26).

7. Vorrichtung nach einem der vorangehenden Ansprüche, dadurch gekennzeichnet, daß jede gleitbare Scheibe (24, 26) mehrere Bohrbüchsen (32, 34) von verschiedenen Durchmessern aufweist, wobei die Achsen zweier Bohrbüchsen (32, 34) des gleichen Durchmessers der einen Platte und der anderen in einer Ebene gehalten sind, welche durch die Richtungen der Verstellung der beiden Scheiben festgelegt ist.

8. Vorrichtung nach einem der vorangehenden Ansprüche, dadurch gekennzeichnet, daß ein Arm (16, 20) des Gehäuses an seinem freien Ende Schlitze (76) aufweist, von denen jeder einer Bohrbüchse (32) der korrespondierenden Scheibe (24) zugeordnet ist, und eine innere Breite gleich dem inneren Durchmesser der zugehörigen Bohrbüchse (32) aufweist.

9. Vorrichtung nach Anspruch 8, dadurch gekennzeichnet, daß der äußere Teil (20) dieses Gehäusearmes Bezugspunkte (80) aufweist, die paarweise, senkrecht zu der Richtung der Verstellung der korrespondierenden Scheibe (24) auf der Achse einer Bohrbüchse (32), wenn die genannte Scheibe (24) in einer vorher festgelegten stellung, z. B. am Ende des Hubes ist, ausgerichtet sind.

10. Vorrichtung nach einem der vorangehenden Ansprüche, dadurch gekennzeichnet, daß ein Arm (16, 20) des Gehäuses (10) Gewindemittel (78) zur Festlegung der Vorrichtung auf zwei übereinanderliegenden Platten (P1, P2) und zur Sicherung dieser Platten am anderen Arm (18, 22) der Vorrichtung aufweist.

FIG.1

FIG. 2

FIG.3

FIG. 4

FIG. 5

FIG. 6

FIG. 7

FIG. 8

FIG.9

FIG. 10

FIG. 11

FIG.13

FIG.12